# FASCICULE DE BREVET EUROPEEN

(11) **EP 3 145 280 B1**
(45) Date de publication et mention de la délivrance du brevet: **19.09.2018**
(21) Numéro de dépôt: 16189803.6
(22) Date de dépôt: 20.09.2016
(51) Int. Cl.: B60Q 1/14, F21V 23/04, F21Y 115/10, F21L 4/02, H05B 33/08

(54) **LAMPE LED DOTÉE D'UN DISPOSITIF DE RÉGULATION DE LA LUMINOSITÉ**
LED-LAMPE MIT REGULIERUNGSVORRICHTUNG DER LEUCHTKRAFT
LED LAMP PROVIDED WITH A BRIGHTNESS CONTROL DEVICE

(30) Priorité: 21.09.2015 FR 1501948
(43) Date de publication de la demande: 22.03.2017
(73) Titulaire: ZEDEL, 38920 Crolles (FR)
(72) Inventeur: NOGHA MBAI, Christophe, 69500 Bron (FR); BERREL, Philippe, 38580 La Chapelle du Bard (FR)
(74) Mandataire: Schuffenecker, Thierry

(56) Documents cités:
- EP-A1- 2 706 823
- EP-A1- 2 894 398
- WO-A1-2014/060901
- DE-A1- 19 957 210
- FR-A1- 2 930 706

## Description

### Domaine technique

La présente invention concerne les lampes dotées de diodes LED, et notamment une lampe frontale à LED comportant un dispositif de régulation de la luminosité

### Etat de la technique

Les lampes frontales sont utilisées dans un grand nombre d'activités tant professionnelles, que sportives ou ludiques.

D'une manière générale, ces lampes sont destinées à permettre un éclairage de type "main libre" efficace, confortable et assurant une longévité maximale de la batterie.

On cherche depuis plusieurs années à accroître les fonctionnalités des nouvelles lampes frontales.

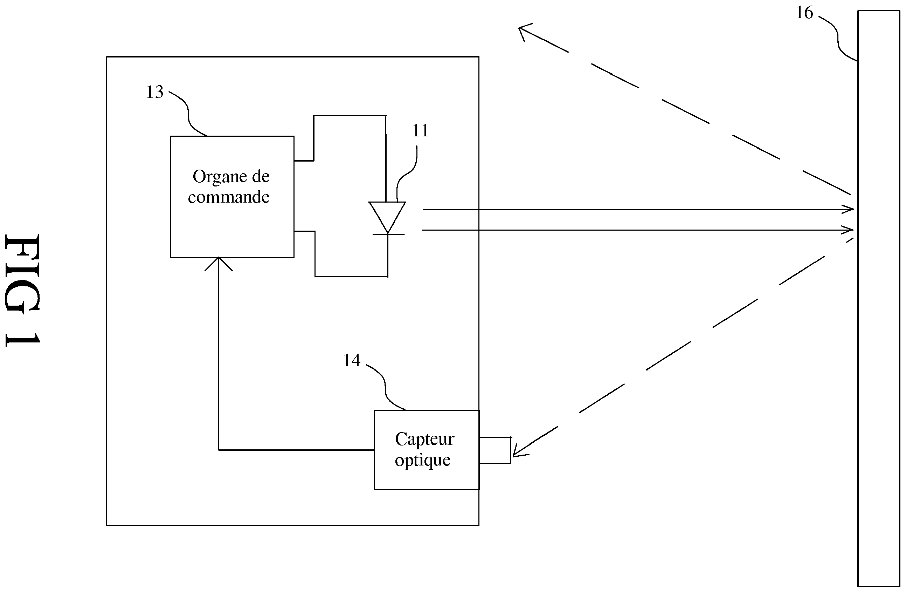

La demanderesse de la présente demande de brevet a ainsi introduit le concept de lampe dite "dynamique", introduisant une régulation de la puissance d'émission lumineuse de la lampe, contrairement à un mode dit "statique" basée sur une puissance constante. La demande de brevet FR2930706 en date du 24 Avril 2008 décrit une lampe d'éclairage auto-régulée utilisant un capteur de la lumière réfléchie par un objet éclairé par la lampe pour la régulation de l'intensité lumineuse. La figure 1 illustre une telle lampe qui comporte un capteur optique 14 logé dans le boîtier au voisinage de la diode électroluminescente LED 11 pour délivrer un signal représentatif de la lumière réfléchie par la surface d'un objet 16 éclairé, et transmettre ledit signal à une deuxième entrée d'un organe de commande 13 pour réguler automatiquement la puissance de la LED en fonction d'un seuil prédéterminé. De cette manière, une régulation automatique du faisceau lumineux émis par la lampe est effectuée sans action manuelle pour adapter l'éclairage à l'environnement, tout en gérant la consommation en énergie.

Cette lampe connue a été améliorée par la disposition de plusieurs LEDs permettant la production de faisceaux distincts, respectivement large et étroit, assurant ainsi une grande flexibilité aux utilisateurs de cette lampe, qui peut ainsi bénéficier d'une forte luminosité pour voir « *au loin* », mais également un vision confortable « *de près* ».

Cette lampe connaît un grand succès notamment au sein des communautés sportives, et notamment l'escalade, la randonnée, la course à pied etc...

En revanche le mécanisme de régulation « dynamique » est délicat à mettre en oeuvre car il a tendance à être perturbé aisément par des échos lumineux qui interfèrent différemment celui que l'on est en vision « au loin », avec un faisceau étroit ou en vision « de près » avec un faisceau large.

Il est souhaitable de pouvoir améliorer le mécanisme de régulation de la luminosité de façon à minimiser les interférences et les échos dans toutes les situations, de manière à permettre une utilisation dans tous les secteurs, aussi bien sportifs que professionnels et industriels.

Tel est le problème technique que se propose de résoudre la présente invention.

Les références suivantes font partie de l'état de la technique :
WO 2014/060901 décrit un appareil comprenant un premier capteur de lumière configuré avec un premier champ de vision; et un second capteur de lumière configuré avec un second champ de vision plus étroit contenu dans le premier champ de vision. Les premier et second capteurs de lumière peuvent être agencés pour détecter la lumière réfléchie à partir d'une surface éclairée, dans lequel le premier et le deuxième champ de vision englobent la lumière provenant d'un dispositif d'éclairage électrique réfléchi par ladite surface et une lumière supplémentaire réfléchie par ladite surface, par exemple lumière naturelle. Mais le second capteur de lumière est concentré sur une région sur ladite surface de manière à exclure l'éblouissement des objets situés à l'extérieur de ladite région, alors que le premier champ de vision s'étend au-delà de ladite région. Un niveau d'illumination de l'environnement dans lequel l'appareil est installé peut être ajusté pour compenser une variation de la lumière supplémentaire en fonction de l'information qui distingue les deux capteurs.
DE 19957210 décrit un précédé visant à déterminer l'intensité moyenne dans l'environnement d'un véhicule automobile et à allumer l'éclairage du véhicule si l'intensité est inférieure ou égale à une valeur seuil pendant un intervalle de temps. Une valeur d'intensité moyenne en temps est formée et comparée au seuil, et l'éclairage peut être activé si cette valeur est inférieure ou égale au seuil.

### Résumé de l'invention

C'est un but de la présente invention que de réaliser une lampe frontale capable de produire des faisceaux lumineux distincts et doté d'un mécanisme de régulation dynamique de la luminosité minimisant les interférences lumineuses dans toutes les situations.

C'est un autre but de la présente invention que de réaliser une lampe frontale susceptibles d'être utilisée dans de multiples pans de l'industrie ainsi que par les sportifs, randonneurs etc...
C'est un autre but de la présente invention que de réaliser une lampe dotée d'un faisceau à géométrie variable permettant d'adapter immédiatement la régulation dynamique au type de faisceau lumineux, étroit ou large, produit par la lampe.
C'est un autre but de la présente invention consiste à réaliser une lampe frontale dotée de fonctionnalités nouvelles utilisables dans un grand nombre d'applications.
Ces buts sont atteints grâce à la réalisation d'une lampe, telle qu'une lampe frontale, comportant:
- une source lumineuse dotée d'une ou plusieurs diodes de type LED;
- des moyens permettant de commander la luminosité et/ou la géométrie du faisceau lumineux de la lampe en réponse à une information ou signal de commande;
- un système de capture permettant de générer un signal électrique représentatif de l'intensité lumineuse réfléchie de la zone éclairée ;
- une unité de commande destinée à générer ladite information ou ledit signal de commande à partir de l'information générée par ledit capteur.
La lampe est caractérisée en ce que le système de capture est associé à une focale à champ variable sous la commande de l'unité de commande de manière à générer des signaux électriques représentatifs de focales différentes.

La lampe comporte un système de capture doté d'un unique capteur associé à un système optique qui est commandable électriquement et qui est configuré pour être commandé par l'unité de commande (230), de façon à permettre ainsi un véritablement asservissement de l'angle de capture, conjointement à la génération de l'information ou du signal de commande commandant le faisceau lumineux.
Dans un mode de réalisation particulier, la source lumineuse comporte une unité d'affichage à LED, comportant au moins deux diodes LED dotées chacune d'un système optique focale propre et dont l'alimentation en courant est commandée par ladite information/signal de commande.
De préférence, la source lumineuse comporte une ou plusieurs diodes LED associée(s) à un système optique commandable, ledit système optique étant commandée par ladite information ou ledit signal de commande.
Dans un mode de réalisation particulier, la lampe comporte des moyens télémétrique générant une information servant également à commander le faisceau lumineux et/ou l'angle de capture de la lampe.
Dans un mode de réalisation particulier, l'unité de commande est configurée avec des paramètres correspondant à un des plusieurs profils prédéterminés, la configuration pouvant être effectuée au moyen d'un port USB permettant la communication avec un ordinateur, une tablette tactile, ou un téléphone intelligent.
L'invention est particulièrement adaptée pour la réalisation d'une lampe frontale.

### Description des figures

D'autres caractéristiques, but et avantages de l'invention apparaîtront à la lecture de la description et des dessins ci-après, donnés uniquement à titre d'exemples non limitatifs. Sur les dessins annexés :
La figure 1 illustre un exemple d'une lampe connue, dite "dynamique", comportant une régulation de la consommation électrique.
La figure 2 illustre un exemple d'une lampe comportant deux capteurs dotés chacun d'un système optique propre.
La figure 3 illustre un mode de réalisation d'une lampe conforme à la présente invention, doté d'un unique capteur associée à un système optique électriquement commandable.
La figure 4 illustre un exemple spécifique de l'exemple d'une lampe comportant deux capteurs.

### Description des modes de réalisation préférés

Les exemples qui vont être décrits à présent sont particulièrement adaptés à la réalisation d'une lampe d'éclairage dotée de diodes LED de puissance, et notamment une lampe frontale.
Bien évidemment, il ne s'agit là que d'exemples non limitatifs et un homme du métier pourra adapter l'invention à d'autres dispositifs lumineux pour en accroître les possibilités de fonctionnement.

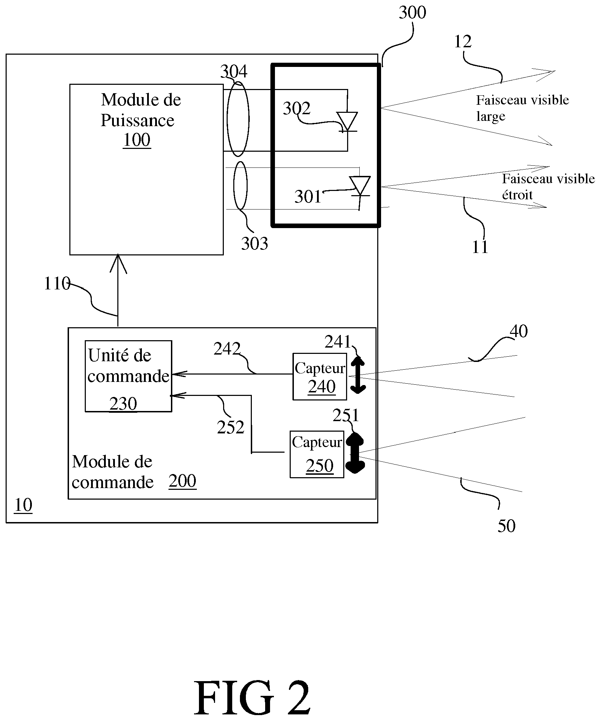

La **figure 2** illustre l'architecture générale d'une lampe 10 - supposée frontale - comportant des moyens sophistiqués de commande de l'intensité lumineuse ayant un système de capture à champ focal variable, qui est basé sur un ensemble de deux capteurs dotés de focales fixes distinctes .
La lampe 10 comprend un module de puissance 100 associé à un module de commande 200 et une unité d'éclairage 300 comportant une pluralité de diodes électroluminescentes DEL 302 (ou LED dans la littérature anglo-saxonne) dotées chacune d'un système focal propre. D'une manière générale, le terme DEL ou LED sera utilisée de manière générique dans la présente description et pourra désigner tout dispositif électroluminescent, telle que diode blanche, rouge, diode laser etc...
Dans l'exemple de la figure 2, l'on a représenté, dans un souci de simplification, un ensemble de deux diodes 301 et 302, respectivement dotées de leur conducteurs d'alimentation 303 et 304 connectés au module de puissance 100 et permettant, grâce à leur système optique associé (non représenté) de produire un faisceau respectivement large et étroit, comme cela est représenté dans la figure 2. Plus généralement, l'on pourra, pour augmenter la luminosité de la lampe, prévoir plusieurs diodes au sein d'un même système optique focal, voire même multiplier le nombre de systèmes optiques afin d'accroître les possibilités d'utilisation de la lampe. Alternativement , l'on pourra également prévoir un ensemble de LEDs dotés d'un système focal unique qui est commandable électriquement, en sorte que l'unité de commande 230 génère également une information/signal de commande destiné à la commande de la géométrie du faisceau lumineux produit par les LEDs. Une telle réalisation est décrite notamment dans la demande de brevet n° 14/00407 en date du 14 Février 2014 déposée par la demanderesse. I
Dans un mode de réalisation spécifique, l'alimentation en courant des diodes LEDs 301 et 302, respectivement via leurs conducteurs d'alimentation 303 et 304, est effectuée sous la commande d'une information ou d'un signal de commande 110 généré par le module de commande 200.

Le module de puissance 100 comporte spécifiquement tous les composants que l'on rencontre conventionnellement dans une lampe d'éclairage à LEDs pour la production d'un faisceau lumineux de forte intensité, et en général basée sur la Modulation en Largeur d'Impulsion MLI (ou *Pulse Width Modulation* dans la littérature anglo-saxonne), bien connue d'un homme du métier et similaire à celle que l'on rencontre dans les circuits audio de classe D. Cette modulation MLI est commandée au moyen du signal de commande 110. D'une manière générale, l'on notera que le terme "signal" mentionné précédemment renvoie à une grandeur électrique - courant ou tension - permettant de provoquer la commande du module de puissance, et notamment la modulation MLI servant à alimenter en courant la diode LED 302. Il ne s'agit ici que d'un mode particulier de réalisation, étant entendu qu'il sera possible de substituer au "signal de commande 110" toute "information de commande" , par exemple une information logique stockée dans un registre et transmise par tout moyen approprié au module de commande 100 dans le but de commander la puissance d'émission du faisceau lumineux. Dans un mode de réalisation particulier, l'on pourra même envisager que les deux modules de commande et de puissance soient intégrés dans un même module ou circuit intégré.

Un homme du métier comprendra donc aisément que lorsque l'on se réfère à un "signal de commande 110", l'on englobe indistinctement les réalisations recourant à une grandeur électrique de commande - courant ou tension - ainsi que les réalisations dans lesquelles la commande est réalisée au moyen d'une information logique transmise au sein du circuit de puissance. Pour cette raison, l'on parlera ci-après indistinctement de *signal* ou *d'information* de commande.

D'une manière générale, les composants qui composent le module de puissance 100 - commutateurs et circuits - sont bien connus d'un homme du métier et l'exposé sera délibérément allégé à cet égard dans une souci de concision. De même, le lecteur sera renvoyé aux ouvrages généraux traitant des divers aspects de la modulation MLI (ou PWM).

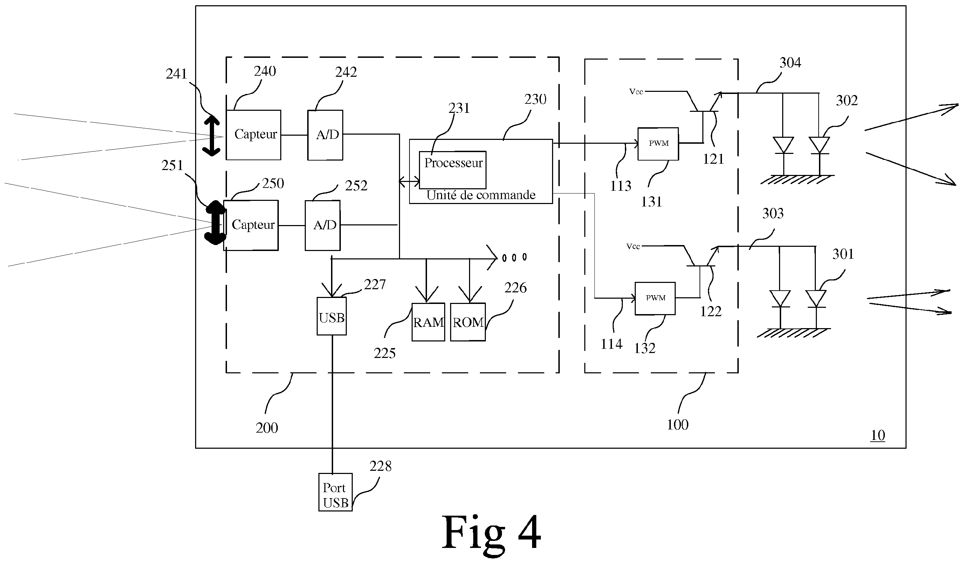

Un exemple plus spécifique de module de puissance sera décrit plus loin en relation avec la figure 4. En revenant à la figure 2, l'on voit que le module de commande 200 comporte un système de capture à champ focal variable, basé sur un ensemble d'au moins deux capteurs, de type photo capteur, 240 et 250 dont les axes sont sensiblement parallèles à l'axe des LED 302/303. Les capteurs 240 et 250 génèrent chacun un signal électrique qui est respectivement transmis via des circuits 242 et 252 à une unité de commande 230 capable de gérer ces signaux.

Chaque capteur 240 ou 250 est associé avec un système optique focal propre, respectivement 241 et 251 assurant, grâce à des optiques focales distinctes, des angles de champ distincts 40 et 50, respectivement étroit et large comme cela est représenté sur la figure 2.

L'unité de commande est en outre adapté pour sélectionner, en tant que de besoin, l'un ou l'autre des signaux générés par les capteurs 240 et 250 pour les exploiter au sein du système de régulation de la luminosité de la lampe.

Ainsi, suivant le mode de réalisation de la figure 2, les signaux générés par les capteurs 240/250, servent à générer, grâce au traitement effectué par l'unité de commande 230 au sein du module de commande 200, une information ou un signal de commande 110 à destination du module de puissance 100 pour la commande de l'alimentation en courant des LEDs 301 ou 302 et, par conséquent, la commande de la focale du faisceau lumineux généré par la lampe, respectivement large (vision de près) et étroite (vision au loin).

Il devient ainsi possible, au moyen d'un traitement approprié réalisé sur les informations respectivement générées par les deux capteurs 240 et 250 de venir sélectionner fort opportunément l'angle de champ approprié pour servir de base au mécanisme de régulation réactif ou dynamique, particulièrement adapté à la luminosité produite par la lampe frontale.

Ainsi, par exemple, dans une situation de vision au loin, avec la génération d'un faisceau visible étroit de forte intensité, comme cela est représenté par la référence 11 de la figure 2, l'unité de commande 230 pourra se baser essentiellement sur l'information produite par le capteur 240 associé à l'optique 241 et, par conséquent, à un angle focal étroit. De ce fait, le système de régulation dynamique sera moins perturbé par des échos lumineux parasites puisque l'angle focale sera particulièrement étroit, ce qui sera bien utile lorsque, par exemple, l'utilisateur de la lampe s'aventure dans une forêt obscure.

Dans une autre circonstance, celle d'une course de fond en milieu obscur, si un coureur doté de la lampe frontale arrive la nuit derrière un autre coureur portant un brasseur fortement réfléchissement, le mécanisme de régulation lumineux peut se trouver fortement perturbé par la présence d'une telle réflexion... Dans cette circonstance, l'on pourra avoir un intérêt à fixer un champ très étroit, de quelques degrés à peine, pour permettre au mécanisme de régulation d'éviter cette perturbation néfaste.

Un tel champ très étroit serait très utile également dans un contexte de promenade nocturne, sur le bord d'une route, lorsque le marche avance vers un panneau de signalisation réfléchissant qui, lui également , est susceptible de venir perturber fortement le mécanisme de régulation dynamique. Une fois encore, en prévoyant une angle de vision particulièrement étroit - quelques degrés à peine - le marcheur s'assure ainsi de minimiser la perturbation que peut présenter le panneau réfléchissant.

Dans d'autres contextes, on aura intérêt à sélectionner le capteur 250 doté d'une focale large, par exemple de près de 90 degrés pour permettre une forme « d'intégration » de l'information lumineuse sur un vaste angle solide.

Par exemple, dans un contexte industriel, un mécanicien pourrait être amené à utiliser la lampe avec un faisceau large de manière à faciliter la vision de prêt. De ce fait, l'unité de commande 230 pourra sélectionner le capteur 250 associé à un angle large de manière à intégrer largement des informations sur un angle solide particulièrement important, ce qui permettra de réduire l'effet des échos indésirables émanant des surfaces brillantes des outils avec lesquels il travaille.

Grâce à l'invention, l'on constate par exemple qu'un ébéniste qui effectue un travail de ponçage éclairé par sa lampe frontale, pourrait être grandement gêné par un angle de vision étroit provoquerait un effet « de pompage » sur le mécanisme de régulation dynamique, à mesure du passage des mains devant la lampe. Dans une telle situation, pour éviter cet effet gênant, l'unité de commande viendrait alors sélectionner l'autre capteur doté d'une focale large, suffisamment large pour que le signal électrique généré par le capteur devienne sensiblement indépendant de la position des mains de l'ébéniste qui, de cette manière , pourrait bénéficier d'un éclairage constant.

Comme on le voit dans les multiples exemples évoqués précédemment, la combinaison d'au moins deux capteurs associés à leurs focales propres et distinctes, et leur sélection adéquate permet d'accroître considérablement les possibilités d'ajustement du mécanisme de régulation dynamique par le choix de l'un ou l'autre des angles de capture pour, finalement améliorer significativement le confort de l'utilisation de la lampe.

L'exemple de la figure 2 montre une disposition comportant deux capteurs distincts dotés chacun de leur optique propre. Un homme du métier pourra clairement envisager de multiplier le nombre de capteurs de manière à accroître les possibilités de réglage du mécanisme de régulation.

Dans un mode de réalisation particulier, le module de commande 200 pourra comporter en outre un module de télémétrie - par exemple télémétrie laser - permettant de fournir à l'unité de commande 230 une information représentative de la distance à un objet éclairé

Plus généralement, l'unité de commande 230 se verra doter de fonctionnalités nouvelles puisqu'il est à présent possible, non seulement de sélectionner l'une ou l'autre des informations générées par les capteurs 240 et 250 (ou tout autre capteur supplémentaire), mais également de commander distinctivement la production des faisceaux respectivement large et étroit produits par les LED 301 et 302.

Dans certaines situations, l'unité de commande 230 pourra ainsi décider automatiquement la commande d'un cône d'éclairage large ou plus étroit, comme cela est illustré avec les faisceau 11 et 12 de la figure 2, et ce en adaptant les angles solides 40 et 50 associés aux capteurs 240 et 250.

D'une manière générale la commande 110 pourra résulter de l'application conjointes des informations générées par les deux capteurs 240 et 250.

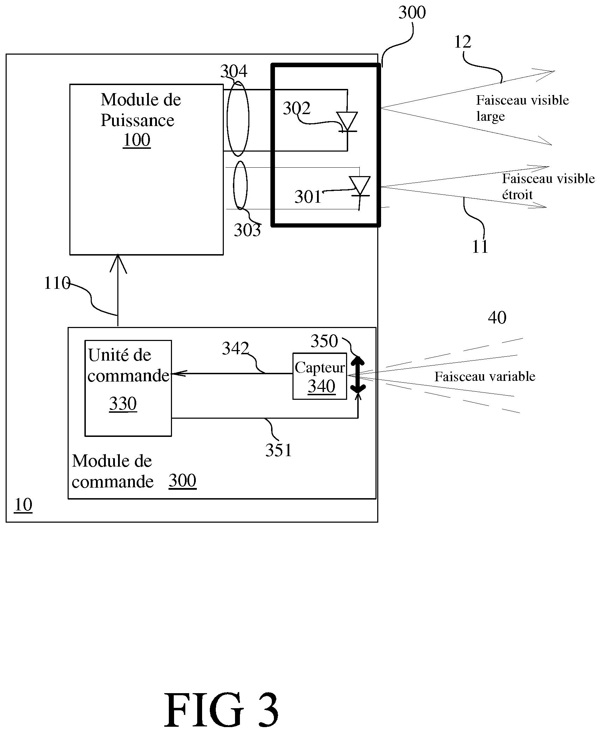

L'on décrit à présent, en référence à la **figure 3****,** un mode de réalisation d'une lampe conforme à la présente invention dans lequel le module de puissance 100 et les diodes LED 301 et 302 sont conservés, mais on a substitué au module de commande 200 un nouveau module de commande 300 comportant un unique capteur 340 associé à une focale 350 qui est commandable électriquement via un signal de commande généré par une unité de commande 330 sur un circuit 351. Ainsi , le système focal à champ variable est basé à présent sur la combinaison du capteur 340 et de son système focal électriquement commandé 350. Le capteur 340 génère une information électrique représentative de la luminosité induite par la lampe et/ou réfléchie par un objet éclairé, qui est transmis via un circuit 342 à l'unité de commande 330.

Les éléments apparents dans la figure 2 qui sont inchangés par rapport au du premier mode de réalisation conservent leur référence numérique.
L'on constate donc, dans ce second mode de réalisation, que l'unité de commande 330 génère à présent deux informations de commande: une première information véhiculée par le signal 110 à destination du module de puissance 100 destinée à la commande de l'alimentation en courant des diodes 301/302 (via les conducteurs d'alimentation 303/304) et une seconde information véhiculée par le circuit 351 destinée au système électro-optique 350 permettant de commander l'angle solide ou le cône de capture du capteur 340. Pour la réalisation du module 306, on pourra envisager tout type de système présentant une optique commandable, en utilisant notamment les touts derniers développements de la micro-électronique tels que les micro-miroirs MEMS, voire les système basés sur les lentilles liquides permettant de réaliser une interface entre deux liquides transparents d'indice de réfaction distincts.
L'unité de commande 330 peut ainsi procéder à un traitement du signal électrique généré par le capteur 350, avec une focale variable pouvant être soit large ou étroite selon les circonstances, de manière à générer conjointement les signaux de commande 110 et 351 servant de base au système de régulation dynamique.

On pourra bien évidemment créer de cette manière un effet de "zoom" commandé automatiquement aussi bien sur l'angle de capture du capteur 340 que sur l'angle du faisceau lumineux générés par les diodes 301 et 302.

Le mécanisme de régulation dynamique devient ainsi particulièrement performant et offre de nouvelles possibilités de réglages, avec la possibilité d'un véritable asservissement de l'angle de capture. Plus généralement, ce mode de réalisation permet d'associer l'éclairage réactif ou dynamique à un asservissement de l'angle de champs de l'optique de capteur de lumière.

En particulier, l'on peut définir trois zones d'action :
Zone 1) : zone de vision au près désignée « **zone de lecture** » , correspondant au mécanisme actuel de régulation de l'éclairage réactif ;
Zone 2) : zone dite **de travail** qui part de la zone de lecture et s'étend jusqu'à une distance réglable par l'utilisateur (ou non), située à mi-distance de l'utilisateur. Cette zone pourra être fort avantageusement définie dans des « profils » particuliers.
Zone 3) : zone dite **de liberté** qui par de la zone de travail et s'étend à l'infini.

L'on peut, dans un mode de réalisation particulier, venir commander l'angle de champ de l'optique du capteur de la façon suivante :
- dans la zone de lecture, l'angle de champs sera le plus large possible ;
- dans la zone de travail, il y aura un asservissement de l'angle de champs de l'optique pour éviter les variations de lumières inconfortables. L'intégration d'un large volume dans l'espace de vision du capteur permet de prendre en compte la majorité des éléments de la scène immédiate . Cette prise en compte évite les variations de lumières indésirables.
- Dans la zone de liberté, l'angle de champ sera le plus resserré possible comme dans le mécanisme de régulation dynamique conventionnel. Cette focalisation de sondage évite des variations de lumières générées par des obstacles qui se trouvent dans la zone de travail.

La figure 4 décrit en détail l'exemple qui avait été décrit en relation avec la figure 2, où l'on voit que le module de puissance 100 comporte une batterie (non représentée sur la figure), laquelle génère une tension d'alimentation Vcc, et deux commutateurs de puissance, respectivement 121 et 122, permettant d'alimenter en courant les diodes LED 301 et 302 respectivement commandées par les circuits 132 et 131 mettant en oeuvre la modulation MLI ou PWM. Les commutateurs 121 et 122 sont par exemple de type à semiconducteur tel qu'un transistor bipolaire, un transistor FET (*Field Effect Transistor*) ou MOS (*Metal Oxyde Semiconductor*) ou MOSFET.
Les deux commutateurs 121 et 122 sont respectivement commandés par les informations ou les signaux de commandes 113 et 114 générés par une unité de commande 230 intégrée au sein du module de commande 200.
Il ne s'agit ici que d'un mode de réalisation, et un homme du métier pourra clairement utiliser d'autres exemples d'architecture, et notamment en regroupant les deux circuits 121 et 122 au sein d'un même circuit électronique.
Toujours en référence à la figure 4, l'unité de commande 230 intègre un processeur de traitement du signal 231 communiquant via des bus d'adresses, de données et de commande conventionnels avec de la mémoire RAM 225, de la mémoire ROM ou EEPROM etc... 226.
A titre d'illustration, le capteur 240 (resp. 250) qui est représenté dans la figure 2 est un capteur analogique doté de son système optique 241 (resp 251), et associé à un convertisseur analogique/numérique 242 (resp. 252) permettant la génération d'une information numérique qui pourra ensuite être rendue accessible au processeur de signal 231 via les bus de données, d'adresses etc...

Dans un mode de réalisation, les photocapteurs 240 et 250 présentent un axe sensiblement parallèle à l'axe des diodes LEDs en sorte que les angles solides de ces capteurs correspondent à la zone éclairée par ces dernières.
Dans un autre mode de réalisation, un port USB 228 est accessible via un module USB 227 inclus dans l'unité de commande et connecté au bus, permettant l'échange de données suivant le standard USB. Particulièrement, l'interface USB permettra comme on le verra ci-après, le stockage de paramètres de réglage et de profils au sein de la lampe.
De cette manière, l'unité de commande 230 peut communiquer avec un dispositif de traitement de données tel qu'un ordinateur, un ordinateur portable, une tablette tactile, un assistant personnel et voire même un téléphone intelligent (*Smartphone* suivant la littérature anglo-saxonne).
Il est à noter que le port USB n'est qu'un exemple illustratif d'un moyen de communication entre la lampe et un ordinateur, et qu'un homme du métier pourra envisager tout autre moyen de communication, notamment sans fil (*bluetooth, wifi etc*...). Dans un mode de réalisation particulier, la lampe frontale disposera même de sa propre adresse IP (*Internet Protocol suivant la terminologie anglosaxonne*) de manière à pouvoir être aisément configurée, par exemple au moyen d'un serveur web dédié.
Une telle communication est particulièrement avantageuse notamment pour l'échange de données de configuration, tels que des « profils » qui permettent de venir stocker ou sélectionner, en tant que de besoin, des données de réglage de la lampe en fonction de son utilisation souhaitée par son propriétaire, et notamment pour mettre en oeuvre les exemples de diagrammes fonctionnels qui seront décrits ci-après. Alternativement ou cumulativement, les "profils" permettent, comme on le verra ci-après, de venir activer des procédures ou modes spécifiques de fonctionnement, notamment les modes statiques (débrayage de la régulation) ou dynamique (activation de la régulation).

### Avantages de l'invention

En assurant la possibilité de commander jointement les faisceaux lumineux et l'angle du ou des capteur(s) servant à la régulation dynamique, la lampe frontale devient particulièrement plus performante , avec une adaptation plus confortable pour l'utilisateur, dans les situations suivantes :
- lorsque la distance entre la lampe et une surface éclairée est faible et que cette surface est composée de plusieurs couleurs de contrastes très différents (ex : noir, blanc etc...)
- lorsque l'utilisateur évolue à faible distance dans un milieu accidenté (intervention sous un capot de voiture), l'adaptation est améliorée grâce à une minimisation des perturbations provenant des trous, des surfaces réfléchissantes et des couleurs différentes
- lorsque l'utilisateur se trouve en face d'un lampadaire, l'adaptation est moins perturbée par les mouvements de tête de l'utilisateur par rapport à la lumière du lampadaire
- la perturbation liée aux obstacles à mi-distance lorsque l'utilisateur regarde à l'horizon
- lorsqu'un coureur est dans un groupe dans lequel certains concurrents ont des éléments réfléchissant sur leurs équipements

Dans toutes ces situations, l'invention permet d'éviter ou réduire des variations de luminosité intempestives et gênantes qui sont autant de sources d'inconfort pour les utilisateurs.

## Revendications

1. Lampe comportant
- une source lumineuse (300) comportant une ou plusieurs diodes de type LED;
- des moyens (100, 110, 230) permettant de commander la luminosité et/ou la géométrie du faisceau lumineux de ladite source lumineuse en réponse à une information ou un signal de commande;
- un système de capture permettant de générer un signal électrique représentatif de l'intensité lumineuse réfléchie de la zone éclairée par ledit faisceau lumineux sur un objet éclairé ;
- une unité de commande (230) destinée à générer ladite information ou ledit signal de commande à partir de l'information générée par ledit système de capture; **caractérisée en ce que** ledit système de capture est associé à une focale à champ variable commandé par ladite unité de commande pour générer des signaux électriques correspondants à des focales différentes et **en ce que** ledit système de capture comporte
- un capteur associé à un système optique (350) commandable électriquement et configuré pour être commandé par ladite unité de commande (230), et **en ce que** ladite unité de commande est destinée à générer conjointement ladite information ou ledit signal de commande permettant de commander la luminosité et/ou la géométrie dudit faisceau lumineux et un signal de commande pour commander électriquement ledit système optique (350).

2. Lampe selon la revendication 1 **caractérisée en ce que** la source lumineuse comporte une unité d'affichage (300) comportant au moins deux diodes LED dotées chacune d'un système optique focale propre et dont l'alimentation en courant est commandée par ladite information/signal de commande.

3. Lampe selon la revendication 1 **caractérisée en ce que** la source lumineuse comporte une ou plusieurs diodes LED associée(s) à un système optique commandable, ledit système optique étant commandée par ladite information ou ledit signal de commande.

4. Lampe selon l'une des revendications 1 à 3, **caractérisée en ce que** ledit module de commande (200) comporte également des moyens télémétriques permettant de déterminer la distance à un objet, de façon à utiliser conjointement la mesure de cette distance pour la génération de l'information ou du signal de commande du faisceau lumineux et/ou un angle de capture de la lampe.

5. Lampe selon l'une des revendications précédentes dans laquelle l'unité de commande (230) est configuré avec des paramètres correspondant à un des plusieurs profils prédéterminés.

6. Lampe selon la revendication 5 **caractérisée en ce que** ladite configuration est effectuée au moyen d'un port USB permettant la communication avec un ordinateur, une tablette tactile, ou un téléphone intelligent.

7. Lampe selon l'une quelconque des revendications précédentes **caractérisé en ce qu'**elle consiste en une lampe frontale.

## Patentansprüche

1. Leuchte, umfassend
- eine Lichtquelle (300) mit einer oder mehreren LED-Dioden;
- Mittel (100, 110, 230) zum Regeln der Helligkeit und/oder Geometrie von Lichtstrahlen der Lichtquelle in Antwort auf Informationen oder ein Steuersignal;
- ein Erfassungssystem zum Erzeugen eines elektrischen Signals, das die Lichtstärke, die von einer durch den Lichtstrahl beleuchteten Fläche auf einem beleuchteten Objekt reflektiert wird, darstellt;
- eine Steuereinheit (230) zum Erzeugen der Information oder des Steuersignals aus der durch das Erfassungssystem erzeugten Information;
**dadurch gekennzeichnet, dass** das Erfassungssystem einer Einheit mit variabler Brennweite zugeordnet ist, die von der Steuereinheit gesteuert wird, um elektrische Signale zu erzeugen, die unterschiedlichen Brennweiten entsprechen, und dass das Erfassungssystem
einen Sensor umfasst, der einem elektrisch steuerbaren optischen System (350) zugeordnet und so ausgelegt ist, dass er von der Steuereinheit (230) gesteuert wird, und dass die Steuereinheit zum gemeinsamen Erzeugen der Information oder des Steuersignals zum Regeln der Helligkeit und/oder der Geometrie der Lichtstrahlen und eines Steuersignals zum elektrischen Steuern des optischen Systems (350) ausgelegt ist.

2. Leuchte nach Anspruch 1, **dadurch gekennzeichnet, dass** die Lichtquelle eine Anzeigeeinheit (300) umfasst, die mindestens zwei LEDs umfasst, die jeweils mit einem eigenen System mit einer optischen Brennweite versehen sind und deren Stromversorgung durch die Informationen/das Steuersignal gesteuert wird.

3. Leuchte nach Anspruch 1, **dadurch gekennzeichnet, dass** die Lichtquelle eine oder mehrere LED-Dioden umfasst, die einem steuerbaren optischen System zugeordnet sind, wobei das optische System durch die Informationen oder das Steuersignal gesteuert wird.

4. Leuchte nach einem der Ansprüche 1 bis 3, **dadurch gekennzeichnet, dass** das Steuermodul (200) weiterhin telemetrische Mittel zur Bestimmung der Entfernung zu einem Objekt umfasst, um die Messung dieser Entfernung gemeinsam zur Erzeugung der Informationen oder des Signals zum Steuern der Lichtstrahlen und/oder eines Erfassungswinkels der Leuchte zu verwenden.

5. Leuchte nach einem der vorhergehenden Ansprüche, bei der die Steuereinheit (230) mit Parametern konfiguriert ist, die einem von mehreren vorbestimmten Profilen entsprechen.

6. Leuchte nach Anspruch 5, **dadurch gekennzeichnet, dass** die Konfiguration mittels eines USB-Ports durchgeführt wird, der die Kommunikation mit einem Computer, einem Touch-Tablett oder einem Smartphone ermöglicht.

7. Leuchte nach einem der vorhergehenden Ansprüche, **dadurch gekennzeichnet, dass** sie aus einem Scheinwerfer besteht.

## Claims

1. Lamp comprising
- a light source (300) comprising one or more LED type diodes;
- means (100, 110, 230) for controlling the brightness and/or the geometry of the light beam of said light source in response to a control information or a control signal;
- a sensing system for generating an electrical signal representative of the reflected light intensity of the area illuminated by said light beam on an illuminated object;
- a control unit (230) for generating said control information or said control signal from the information generated by said sensing system,
**characterized in that** said sensing system is associated with a variable field focal length controlled by said sensor unit for the purpose of generating electrical signals corresponding to different focal lengths and **in that** said sensing system comprises
- a sensor associated with an electrically controllable optical system (350) and configured to be controlled by said control unit (230),
And **in that** said control unit is configured to jointly generate said control information or control signal allowing the control of the brightness and/or geometry of said light beam and a control signal for electrically controlling said optical system (350).

2. The lamp according to claim 1, **characterized in that** the light source comprises a display unit (300) comprising at least two LED diodes each having an appropriate focal optical system and whose power supply is controlled by said control information/signal.

3. The lamp according to claim 1 **characterized in that** the light source comprises one or more LEDs associated with a controllable optical system, said optical system being controlled by said control information or said control signal.

4. The lamp according to one of claims 1 to 3, **characterized in that** said control module (200) also comprises telemetric means for determining the distance to an object, so as to jointly use the measurement of this distance for the generation of the control information or control signal of the light beam and/or the angle of sensing of the lamp.

5. The lamp according to one of the preceding claims wherein the control unit (230) is configured with parameters corresponding to one among the plurality of predetermined profiles.

6. The lamp according to claim 5 **characterized in that** said configuration is performed by means of a USB port for communication with a computer, a touch pad, or a smartphone.

7. The lamp according to any one of the preceding claims, **characterized in that** it consists of a headlamp.
